# EUROPEAN PATENT SPECIFICATION

(11) **EP 2 268 962 B1**
(45) Date of publication and mention of the grant of the patent: **18.06.2014**
(21) Application number: 09726382.6
(22) Date of filing: 25.03.2009
(51) Int. Cl.: F16L 55/128, F16L 55/1645

(54) **ISOLATION METHOD**
ISOLATIONSVERFAHREN
PROCÉDÉ D'ISOLATION

(30) Priority: 25.03.2008 GB 0805344
(43) Date of publication of application: 05.01.2011
(73) Proprietor: Flexlife Limited, Aberdeen AB23 8GX (GB)
(72) Inventor: RYAN, Nicholas John, Aberdeenshire AB51 6XD (GB); MARSDEN, John, Bucksburn Aberdeen, Aberdeenshire AB21 9BG (GB); MITCHELL, Stuart, Aberdeen, Aberdeenshire AB21 9BG (GB)
(74) Representative: Crosby, Wendy Agnes
(86) International application number: PCT/GB2009/050287
(87) International publication number: WO 2009/118557

(56) References cited:
- FR-A- 2 857 726
- FR-A- 2 893 973
- US-A- 5 229 453
- DAVID W. RUSCH, MICHAEL ROMANO: "Internal Repair of Pipeline Leaks Using Pressure-Activated Sealant" SOCIETY OF PETROLEUM ENGINEERS, vol. SPE, no. 91400, 17 September 2004 (2004-09-17), XP002543702 Charleston

## Description

The present invention relates to an isolation method for isolating a section of a tubular member and more particularly to an isolation method for isolating a section of a pipe to seal the internal bore of the pipe against fluid flow. The invention finds particular application in the field of sealing flexible pipelines and more particularly still sealing the rough bore of a flexible pipe in a pipeline.

Pipelines are routinely used for transporting materials such as fluids and particularly hydrocarbons including liquids and gasses over large distances. This may be between an offshore facility such as a well and an offshore processing plant.

The pipeline is generally formed of discrete sections of pipe which are connected together end to end to form a continuous path for the materials to flow. Flexible Pipe is a term used to describe a multi layered pipe which is formed from materials which allow it to bend relatively easily. It is generally constructed of various layers of materials such as polymers and metals or composites.

Flexible pipes are used throughout the oil and gas industry both onshore and predominately offshore. Their attraction is the ease of installation and their ability to withstand cyclic bending, and therefore they are less prone to fatigue than rigid risers.

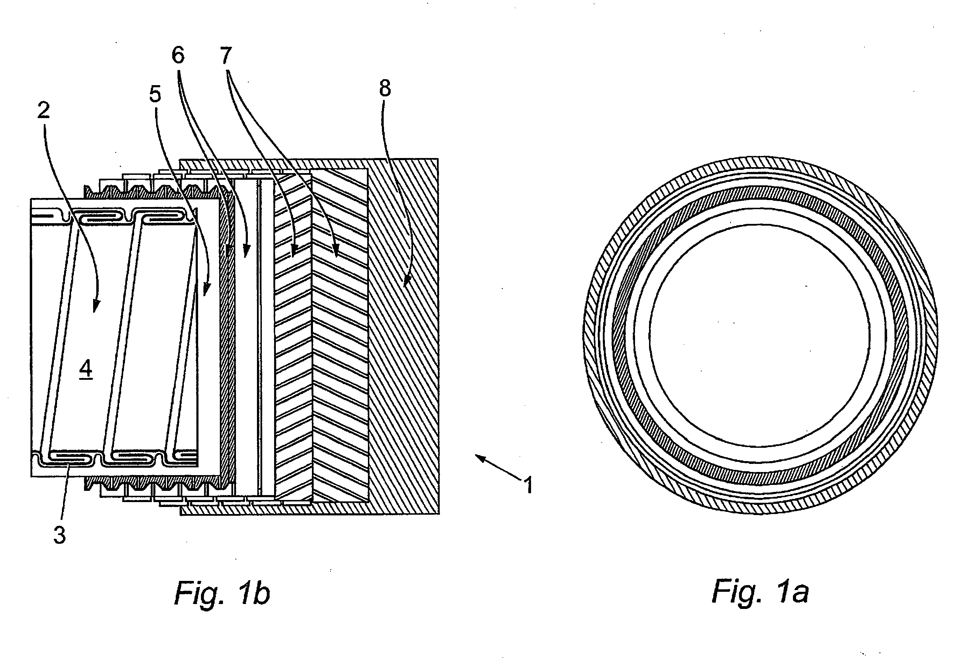

The internal bore of a flexible pipe can be smooth or rough. A cross-section of a typical flexible pipe 1 is shown in Figures 1 a and b.

The carcass 2 represents the innermost layer of the pipe and prevents the pipe from collapsing under external hydrostatic pressure. The carcass 2 is formed of interlocked wires 3 in the form of a folded interlocked flat metal which provides stability and resists collapse whilst remaining flexible. The carcass also presents a corrugated surface 4 which allows fluids flowing in the pipe to seep through the carcass.

An internal pressure sheath 5 surrounds the carcass 2 and acts as a boundary for conveyed fluids within the pipe. The pressure sheath is generally formed by a thermoplastic inner fluid barrier and provides a seal to prevent internal fluid flowing in the pipeline from escaping from the inner carcass.

A pressure armour 6 is formed around the outer surface of the internal pressure sheath 5 and provides hoop strength to the pipeline to resist internal and external hoopwise pressure which could otherwise cause the pipe 1 to collapse.

A helically wound tensile armour 7 formed of rectangular or round wire or composite rods is provided over the pressure armour 6 to provide axial support and to support the hoop strength of the pipe.

An outer sheath layer 8 covers the tensile armour 7 to protect the pipe against seawater ingress and material damage to the tensile armour 7 of the pipe 1.

For the purposes of the present invention, the carcass and internal pressure sheath of the pipe are of most interest. Figure 1 a provides a close up schematic view of the carcass 2 of a rough bore flexible pipe which shows the folded links of the interlocked wires 3 of the carcass which allow fluids such as liquids or gasses flowing in the pipeline to flow through the carcass and along the inner surface of the internal pressure sheath 5.

Isolation devices which comprise a plug are commonly used to seal pipes when intervention in the pipeline is required such as for maintenance or repair methods and devices for plugging a portion of casing, by injection of a liquid that is able to harden, are also known, for example from FR 2 893 973 A. Rough bore flexible pipelines are not easily sealed using known plugs due to their inherent rough inner textured surface.

The current method of intervening in such a pipeline is to isolate the pipe using valves within the subsea system and to remove and recover the pipe to the surface for replacement or repair. This is a costly exercise and depending upon valve arrangements is not always practicable. It is therefore an object of the present invention to provide a method and apparatus for safely isolating a flexible pipeline.

According to one aspect of the present invention there is provided a method of isolating a section of rough bore flexible pipe, said method including the steps of deploying a sealing device into the pipe to the required position and forcing a sealing solution through the carcass of the flexible pipe to seal the space between the sealing device and the internal pressure sheath of the flexible pipe.

Preferably the sealing solution comprises a solution of discrete particles.

Advantageously the sealing solution is pressurised.

Preferably the discrete sealing elements comprise elastomeric and/or polymeric materials.

Advantageously, a bonding material is injected onto the sealing solution. Preferably the bonding material adheres the sealing elements together between the carcass and the inner pressure sheath.

Preferably, the bonding material comprises an elastomer or epoxy.

Advantageously, the sealing solution is injected from a reservoir on the body of the sealing device.

Conveniently two sealing devices may be deployed to isolate a length of pipeline between them.

Preferably the method further comprises the step of anchoring the sealing device within the pipe.

Advantageously the sealing device is mechanically anchored within the pipe.

A further aspect of the present invention relates to the use of a sealing device in the method according to the first aspect of the invention to isolate a section of a rough bore flexible pipe, said sealing device comprising means for anchoring the sealing device in the pipe and means for sealing the device in the pipe, said sealing means comprising means for forcing a sealing solution through the carcass of the pipe.

Preferably the sealing device comprises a reservoir for storing the sealing solution. Preferably also the sealing device comprises means for storing the sealing solution under pressure.

Advantageously the reservoir is pressurised from a pressure source provided on or remote from the sealing device.

An embodiment of the present invention will now be described with reference to and as shown in the accompanying figures in which:-
Fig. 1a is a part cross-sectional view of a rough bore pipe;
Fig. 1b is an enlarged view of the end of the pipe of fig. 1;
Fig. 2 is a schematic view of a sealing device for use in a method according to one aspect of the present invention in position within a pipe prior to actuation, and
Fig. 3 is a schematic perspective view of the sealing device of Fig. 2 once a seal is established through the carcass of the pipe.

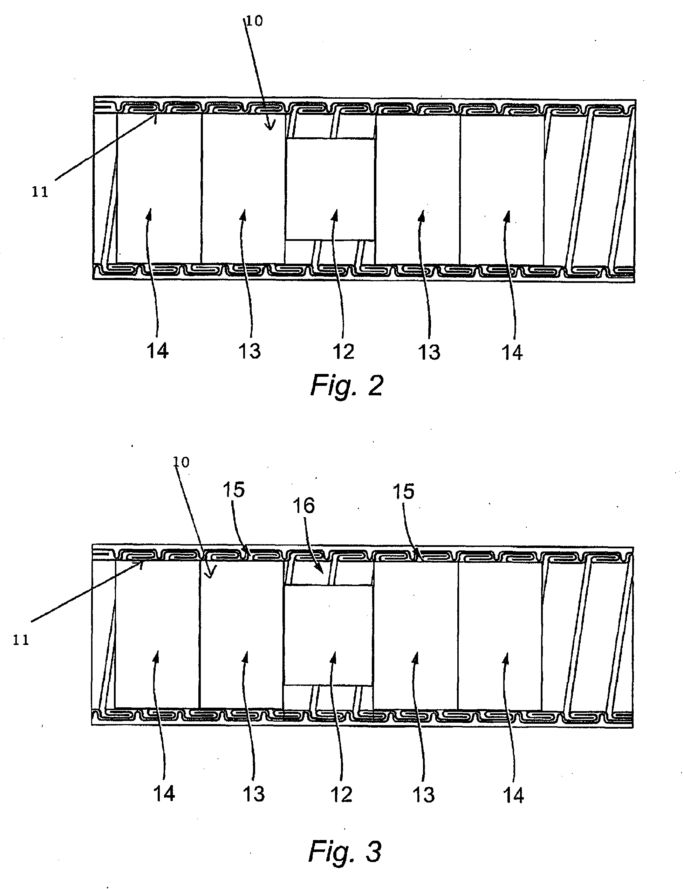

Turning now to Fig. 2 there is shown a sealing device for use in a method of isolating a section of a pipe according to one embodiment of the present invention. The sealing device 10 comprises a substantially tubular body 11. The body may have connection points (not shown) on one end face to enable control lines (not shown) such as for example hydraulic lines to be operatively connected to the plug.

The body is formed from a plurality of modules 12,13,14 which may be integrally formed or may be connected together in a known manner.

5 modules are shown in the illustrated example. The central module 12 which has a smaller diameter than the surrounding modules is an injector. A further injector module is provided on either side of the central injector, each of the outer injectors 13 having an outer diameter which substantially matches the inner diameter of the carcass of the pipe. Finally, an anchoring module 14 is provided at the outer sides of each of the outer injector modules.

A reservoir (not shown) is provided within the injector modules body for storing a sealing solution. The reservoir of the central injector preferably stores a solution of discrete sealing elements and the reservoirs of the outer injectors preferably store a setting gel or bonding material as will be described further below.

Each of the injectors is provided with one or more outlets (not shown) located at on or around the circumference of the body of the modules. The reservoir of the central injector module is connected to a high pressure source located for example at the surface or a remote location. The high pressure source may be air, water or any other suitable pressurised fluid.

The reservoir can be selectively pressurised to force the solution of discrete sealing elements out of the outlets of the reservoir as will be described further below.

The method of isolating a pipe 1 according to one aspect of the present invention will now be described in relation to a subsea pipe in a subsea pipeline. It will of course be understood that the method is not limited to application on subsea pipelines and could of course be applied to other pipelines.

The sealing device 10 is deployed into the pipeline by a known process such as for example, by hand, by umbilical or via a pipeline pig. Once the sealing device has reached the required position within the pipeline the body 11 is anchored within the bore of the pipe for example by actuating the anchoring modules at either end of the device.

Actuation of the anchoring modules creates a mechanical attachment for the device within the pipe. The actuating modules can mechanically lock the device to the internal carcass and prevent movement of the device within the pipe.

At this point, fluids flowing in the pipeline can still bypass the plug 10 as the fluids can pass between the interlocked wires 3 of the folded links of the carcass 2 into the inner pressure sheath 5 and along the pipeline.

To create a seal between the carcass 2 and the inner pressure sheath 5 of the pipe, the outer injectors are activated to force a setting gel through the carcass of the pipe 15. The gel may be an epoxy or elastomeric material. In one embodiment a catalyst may be provided to set the gel around the sealing elements. In one embodiment, the gel comprises an epoxy or an elastomer material.

Following injection of the gel, the internal reservoir of the central injector is pressurised for example via a hose attached to a connection point on the body and the discrete sealing elements are injected from the reservoir in the body into the space 16 between the pipe plug and the inner pressure seal and forced against the inner surface of the pressure sheath. The discrete sealing elements preferably comprise elastomeric and/or polymeric materials which are selected depending upon the local conditions in which the seal is required to operate.

By maintaining the pressure on the discrete elements they can be forced through the carcass against the pressure sheath to form a pressure seal between the outer surface of the body and the inner surface of the pressure sheath. An operator on the surface or in a control facility remote from the plug can control operation of the plug and injection of the solution of discrete sealing elements.

The preinjected bonding material seals the discreet sealing elements together.. Alternatively, a time delay may be built in to inject the gel or catalyst before the discrete sealing elements.

The discrete sealing elements fill the space between the plug 10 and the inner sheath 5 and set to provide a pressure seal at the required location across the inner carcass. As the seal extends through the carcass, fluids flowing in the pipe are prevented from passing the plug 10 within the pipe or the seal across the carcass 2 and the required section of pipe 1 is therefore isolated.

The integrity of the seal across the carcass of the pipe can be monitored by monitoring the pressure across the sealing device. Any drop in pressure will signify a leak through the carcass of the pipe. This provides continuous feedback to the operator on the integrity of the seal.

A second sealing device 10' may be deployed within the pipe 1 at a location downstream of the first plug to isolate a section of pipe between the two plugs. The section of pipe can then be removed if required, or repaired in situ whilst flow within the pipeline is temporarily suspended.

When the maintenance or repair operation is complete, the sealing device 10 can be disengaged and recovered from the pipe 1. The sealing device is disengaged by deactivating the anchoring modules within the body to release the mechanical lock between the carcass and the device and the pressure source is deactivated.

The sealing device can now be pulled back out of the pipe. As the device is removed, the pressure seal between the discrete sealing elements and the inner surface of the inner pressure sheath is broken.

Any small amounts of discrete sealing elements or gel remaining in the carcass 2 will have no adverse effect on the pipe properties or on fluid flow within the pipe 1.

In a further embodiment the reservoir of the central injector module may be charged with a further solution of bonding material similar or dissimilar to that of the outer injectors. In this embodiment the outer injectors force the bonding material through the carcass of the pipe and a further solution of bonding material is then injected from the central injector. This additional supply of boding material plugs any leaks in the active seal formed by the initial injection of bonding material.

In a still further embodiment, the outer injector modules may be replaced with injector modules charged with a further supply of discreet sealing particles. Alternatively, the outer injectors may be removed and the sealing device comprise a central injector with an anchoring module on either end.

The present invention provides a quick and effect method of isolating a length of a flexible pipe which is both cost effective and time efficient and represents a substantial saving to the industry.

It will be appreciated that the present invention may be utilised in off-shore pipes which allows a flexible pipe to be effectively isolated in situ and an inspection or repair to be carried out locally. The pipe can be pressure tested for leaks or damage to the inner carcass without having to recover the pipe to the surface. This overcomes the problems associated with current isolation methods as described above.

The present invention can also be used onshore to provide a plug within a flexible pipe to allow pressure testing of the pipe to be carried out against the sealing device to identify any leaks in the pipe which will be revealed by a fall in pressure within the pipe across the sealing device.

## Claims

1. A method of isolating a section of rough bore flexible pipe, said method including the steps of deploying a sealing device (10) into the pipe to the required position and forcing a sealing solution through the carcass (2) of the flexible pipe to seal the space between the sealing device and the internal pressure sheath (5) of the flexible pipe.

2. A method according to claim 1, wherein the sealing solution comprises a solution of discrete particles.

3. A method according to claim 1 or 2, wherein the discrete sealing elements comprise elastomeric and/or polymeric materials.

4. A method according to claim 1, 2 or 3 wherein the sealing solution is pressurised.

5. A method according to any of the preceding claims, wherein a bonding material is injected onto the sealing solution.

6. A method according to claim 5, wherein the bonding material adheres the sealing elements together between the carcass and the inner pressure sheath.

7. A method according to claim 5 or 6, wherein the bonding material comprises an elastomer or epoxy.

8. A method according to any of claims 1-7, wherein the sealing solution is injected from a reservoir on the body of the sealing device.

9. A method according to any of claims 1-8, wherein the method further comprises the step of deploying two sealing devices to isolate a length of pipeline between them.

10. A method according to any of the preceding claims, wherein the method further comprises the step of anchoring the sealing device within the pipe.

11. A method according to claim 10, wherein the sealing device is mechanically anchored within the pipe.

12. Use of a sealing device (10) in the method of any of claims 1-11 to isolate a section of a rough bore flexible pipe, said sealing device comprising means for anchoring the sealing device in the pipe and means for sealing the device in the pipe, said sealing means comprising means for forcing a sealing solution through the carcass of the pipe.

13. Use of a sealing device according to claim 12, wherein the sealing device comprises a reservoir for storing the sealing solution.

14. Use of a sealing device according to claim 13, wherein the sealing device comprises means for storing the sealing solution under pressure.

15. Use of a sealing device according to claim 14, wherein the reservoir is pressurised from a pressure source provided on or remote from the sealing device.

16. Use of a sealing device according to any of claims 13 - 15, wherein the sealing solution is a solution of discrete particles.

17. Use of a sealing device according to claim 16, wherein the particles comprise elastomeric and/or polymeric materials.

## Patentansprüche

1. Ein Verfahren zum Isolieren eines Abschnitts der Rohbohrung eines flexiblen Rohrs, wobei das Verfahren die folgenden Schritte umfasst: Einsetzen einer Dichtungsvorrichtung (10) in das Rohr an der erforderlichen Position und Treiben einer Dichtungslösung durch die Karkasse (2) des flexiblen Rohrs, um den Raum zwischen der Dichtungsvorrichtung und der internen Druckverkleidung (5) des flexiblen Rohrs zu dichten.

2. Verfahren gemäß Anspruch 1, wobei die Dichtungslösung eine Lösung diskreter Partikel beinhaltet.

3. Verfahren gemäß Anspruch 1 oder 2, wobei die diskreten Dichtungselemente elastomere und/oder polymere Materialien beinhalten.

4. Verfahren gemäß Anspruch 1, 2 oder 3, wobei die Dichtungslösung druckbeaufschlagt ist.

5. Verfahren gemäß einem der vorhergehenden Ansprüche, wobei ein Bindungsmaterial auf die Dichtungslösung gespritzt wird.

6. Verfahren gemäß Anspruch 5, wobei das Bindungsmaterial die Dichtungselemente zwischen der Karkasse und der internen Druckverkleidung zusammenhaftet.

7. Verfahren gemäß Anspruch 5 oder 6, wobei das Bindungsmaterial ein Elastomer oder Epoxid beinhaltet.

8. Verfahren gemäß einem der Ansprüche 1-7, wobei die Dichtungslösung von einem Behälter auf den Körper der Dichtungsvorrichtung gespritzt wird.

9. Verfahren gemäß einem der Ansprüche 1-8, wobei das Verfahren ferner den Schritt des Einsetzens von zwei Dichtungsvorrichtungen beinhaltet, um eine Länge von Rohrleitung zwischen diesen zu isolieren.

10. Verfahren gemäß einem der vorhergehenden Ansprüche, wobei das Verfahren ferner den Schritt des Befestigens der Dichtungsvorrichtung innerhalb des Rohrs beinhaltet.

11. Verfahren gemäß Anspruch 10, wobei die Dichtungsvorrichtung innerhalb des Rohrs mechanisch befestigt ist.

12. Verwendung einer Dichtungsvorrichtung (10) in dem Verfahren gemäß einem der Ansprüche 1-11, um einen Abschnitt einer Rohbohrung eines flexiblen Rohrs zu isolieren, wobei die Dichtungsvorrichtung Mittel zum Befestigen der Dichtungsvorrichtung in dem Rohr und Mittel zum Dichten der Vorrichtung in dem Rohr beinhaltet, wobei das Dichtungsmittel Mittel zum Treiben einer Dichtungslösung durch die Karkasse des Rohrs beinhaltet.

13. Verwendung einer Dichtungsvorrichtung gemäß Anspruch 12, wobei die Dichtungsvorrichtung einen Behälter zum Lagern der Dichtungslösung beinhaltet.

14. Verwendung einer Dichtungsvorrichtung gemäß Anspruch 13, wobei die Dichtungsvorrichtung Mittel zum Lagern der Dichtungslösung unter Druck beinhaltet.

15. Verwendung einer Dichtungsvorrichtung gemäß Anspruch 14, wobei der Behälter durch eine Druckquelle, die auf der Dichtungsvorrichtung oder abgelegen von dieser bereitgestellt ist, druckbeaufschlagt ist.

16. Verwendung einer Dichtungsvorrichtung gemäß Anspruch 13-15, wobei die Dichtungslösung eine Lösung diskreter Partikel ist.

17. Verwendung einer Dichtungsvorrichtung gemäß Anspruch 16, wobei die Partikel elastomere und/oder polymere Materialien beinhalten.

## Revendications

1. Une méthode pour isoler une section de tuyau flexible d'alésage rugueux, ladite méthode incluant les étapes consistant à déployer un dispositif d'étanchéité (10) dans le tuyau jusqu'à la position requise et forcer une solution d'étanchéité à travers la carcasse (2) du tuyau flexible afin d'obturer de façon étanche l'espace entre le dispositif d'étanchéité et la gaine de pression interne (5) du tuyau flexible.

2. Une méthode selon la revendication 1, dans laquelle la solution d'étanchéité comprend une solution de particules distinctes.

3. Une méthode selon la revendication 1 ou la revendication 2, dans laquelle les éléments d'étanchéité distincts comprennent des matériaux élastomères et/ou polymères.

4. Une méthode selon la revendication 1, la revendication 2 ou la revendication 3 dans laquelle la solution d'étanchéité est pressurisée.

5. Une méthode selon n'importe lesquelles des revendications précédentes, dans laquelle un matériau de liaison est injecté sur la solution d'étanchéité.

6. Une méthode selon la revendication 5, dans laquelle le matériau de liaison fait adhérer ensemble les éléments d'étanchéité entre la carcasse et la gaine de pression intérieure.

7. Une méthode selon la revendication 5 ou la revendication 6, dans laquelle le matériau de liaison comprend un élastomère ou un époxyde.

8. Une méthode selon n'importe lesquelles des revendications 1 à 7, dans laquelle la solution d'étanchéité est injectée depuis un réservoir sur le corps du dispositif d'étanchéité.

9. Une méthode selon n'importe lesquelles des revendications 1 à 8, la méthode comprenant en outre l'étape consistant à déployer deux dispositifs d'étanchéité afin d'isoler une longueur de pipeline entre ceux-ci.

10. Une méthode selon n'importe lesquelles des revendications précédentes, la méthode comprenant en outre l'étape consistant à ancrer le dispositif d'étanchéité au sein du tuyau.

11. Une méthode selon la revendication 10, dans laquelle le dispositif d'étanchéité est ancré de façon mécanique au sein du tuyau.

12. Utilisation d'un dispositif d'étanchéité (10) dans la méthode de n'importe lesquelles des revendications 1 à 11 afin d'isoler une section d'un tuyau flexible d'alésage rugueux, ledit dispositif d'étanchéité comprenant un moyen destiné à ancrer le dispositif d'étanchéité dans le tuyau et un moyen destiné à obturer de façon étanche le dispositif dans le tuyau, ledit moyen d'étanchéité comprenant un moyen destiné à forcer une solution d'étanchéité à travers la carcasse du tuyau.

13. Utilisation d'un dispositif d'étanchéité selon la revendication 12, dans laquelle le dispositif d'étanchéité comprend un réservoir destiné à stocker la solution d'étanchéité.

14. Utilisation d'un dispositif d'étanchéité selon la revendication 13, dans laquelle le dispositif d'étanchéité comprend un moyen destiné à stocker la solution d'étanchéité sous pression.

15. Utilisation d'un dispositif d'étanchéité selon la revendication 14, dans laquelle le réservoir est pressurisé depuis une source de pression fournie sur ou à distance du dispositif d'étanchéité.

16. Utilisation d'un dispositif d'étanchéité selon n'importe lesquelles des revendications 13 à 15, dans laquelle la solution d'étanchéité est une solution de particules distinctes.

17. Utilisation d'un dispositif d'étanchéité selon la revendication 16, dans laquelle les particules comprennent des matériaux élastomères et/ou polymères.
